# EUROPÄISCHE PATENTSCHRIFT

(11) **EP 1 920 679 B1**
(45) Veröffentlichungstag und Bekanntmachung des Hinweises auf die Patenterteilung: **21.09.2011**
(21) Anmeldenummer: 07021670.0
(22) Anmeldetag: 07.11.2007
(51) Int. Cl.: A47B 3/08, F16B 12/48, F16B 12/52

(54) **Drehgelenk**
Swivel joint
Joint pivotant

(30) Priorität: 09.11.2006 DE 202006017166 U
(43) Veröffentlichungstag der Anmeldung: 14.05.2008
(73) Patentinhaber: Waibel, Walter, 84130 Dingolfing (DE)
(72) Erfinder: Waibel, Walter, 84130 Dingolfing (DE)
(74) Vertreter: Winter, Brandl, Fürniss, Hübner, Röss, Kaiser, Polte - Partnerschaft

(56) Entgegenhaltungen:
- CH-A5- 692 469
- FR-A- 2 221 907
- GB-A- 1 147 634
- GB-A- 2 049 025
- US-A- 2 769 650
- US-A- 4 643 105
- US-A1- 2005 183 641

## Beschreibung

Die Erfindung betrifft allgemein ein Drehgelenk zur drehbeweglichen Verbindung zweier Bauteile und im Besonderen ein Drehgelenk zur drehbeweglichen Verbindung eines Tischfußes mit einem eine Tischplatte tragenden Tischgestell. Gegenstand der Anmeldung ist des Weiteren ein Tisch (Klapptisch), bei dem ein Tischbein über ein derartiges Drehgelenk an einem eine Tischplatte tragenden Tischgestell drehbeweglich angelenkt ist.

Drehgelenke im erfindungsgemäßen Sinn werden verwendet, um sperrige Gegenstände, wie z.B. Tische, besser zwischenlagern oder transportieren zu können, da sie im zusammengeklappten Zustand einen geringeren Platzbedarf haben.

Klapptische sind im Arbeits-, Heim- und im Freizeitbereich seit vielen Jahren bekannt. Die Verwendung von Klapptischen macht vor allem dann Sinn, wenn diese bedarfsweise auf- und anschließend wieder abgebaut werden sollen. Hierbei werden jedoch sehr unterschiedliche Anforderungen an den Klappmechanismus gestellt.

Während im Freizeitbereich leichte und kostengünstige Lösungen Anwendungen finden, werden im Arbeitsbereich, zum Beispiel bei Büromöbeln, aufgrund von Arbeitsschutzrichtlinien erheblich höhere Anforderungen hinsichtlich Stabilität und Schwingungsfähigkeit gesetzt. Bekannte Klapptische genügen entweder nicht diesen Richtlinien oder sehen einen sehr aufwendigen Klapp- und Arretiermechanismus vor.

Die US 2005/183641 zeigt ein Drehgelenk zwischen zwei Bauteilen nach dem Oberbegriff des Anspruchs 1. Nach dieser Druckschrift stützt ein Lagerbock am ersten Bauteil das zweite Bauteil mit der Schmalseite eines senkrecht zum ersten Bauteil dazu stehenden Blechs.

Die GB 1 147 634 A stützt ein schwenkendes Bauteil am Boden und damit an einer Schmalseite eines U-förmigen Halters.

In der FR 2 221 907 A erfolgt die Abstützung einer Drehung eines Bauteils um einen Bolzen relativ zu einem zweiten Bauteil Ober einen Hebel 10 bzw. einen vorstehenden Zahn dieses Hebels, der in das zweite Bauteil eingreift.

Auch die GB 2 049 025 A zeigt eine Anlage eines Bauteils am Rand eines zweiten Bauteils oder in einer Nut des zweiten Teils.

Die CH 692 469 A5 offenbart zwei Lagerböcke, die jeweils L-förmig ausgebildet und an der Klappfläche eines Klapptisches befestigt sind. Im ausgeklappten Zustand ("einer Endstellung") liegt der Tisch auf oberen Enden von vertikalen Tragsäulen auf.

Die US 4 634 105 A zeigt ein Drehgelenk, das um zwei Wellen mit gleicher Achse dreht und über eine dritte Welle, die in eine Aussparung eingreift, in einer Endstellung blockiert wird. Die dritte Welle übernimmt in dieser Entgegenhaltung das Stützen der am Drehgelenk befestigten Teile gegeneinander.

Die US 2,769,650 A schließlich zeigt ein Drehgelenk, bei dem die Abstützung in der Endstellung nach dem Schwenken über zwei Bolzen in Langlöchern oder Schlitzen erfolgt. Dabei bildet die Schmalseite der Schlitze den Anschlag bildet.

Neben einer ausreichenden Stabilität und Schwingungsfähigkeit kommt der Handhabung solcher Klapptischen eine zunehmend wichtige Bedeutung zu. Deshalb sollen moderne klappbare Büromöbel innerhalb kurzer Zeit und ohne großen montagetechnischen Aufwand auf- bzw. abgebaut werden können. Hierzu erforderlich ist aber ein Drehgelenk, das eine einfache Handhabung gestattet, gleichzeitig aber eine ausreichende Stabilität bietet, um den im täglichen Leben ausgesetzten Zug-, Druck- und Torsionskräften stand zu halten.

Der vorliegenden Erfindung liegt die Aufgabe zugrunde, ein Drehgelenk zur drehbeweglichen Verbindung zweier Bauteile, insbesondere eines Tischfußes mit einem eine Tischplatte tragenden Tischgestell, zu schaffen, welche auf einfache Weise fertigbar und handhabbar ist, aber auch den Anforderungen moderner Arbeitsschutz- und Zertifizierungsrichtlinien hinsichtlich Stabilität und Schwingungsfähigkeit gerecht wird.

Diese Aufgabe wird durch ein Drehgelenk mit den Merkmalen des Anspruchs 1 gelöst. An einem ersten Bauteil des Drehgelenks ist ein Lagerbock vorgesehen, an dem ein zweites Bauteil des Drehgelenks um eine definierte Drehachse drehbeweglich angelenkt ist. Das Drehgelenk weist demnach im Vergleich zu z.B. einem Drehschubgelenk, wie es z.B. aus der DE 20 2005 010 237 U1 bekannt ist, lediglich einen Freiheitsgrad auf. Die Drehachse kann von einem das zweite Bauteil tragenden, am Lagerbock gehaltenen Drehbolzen definiert sein. Am Lagerbock ist ein plattenförmiger Anschlag vorgesehen, der in einer Drehendstellung, beispielsweise in einer Stellung, in der das erste Bauteil und das zweite Bauteil zumindest in etwa rechtwinklig zueinander angeordnet sind, eine weitere Drehbewegung des ersten Bauteils relativ zum zweiten Bauteil verhindert. Erfindungsgemäß ist der plattenförmige Anschlag in einem vorgegebenen Abstand zur Drehachse in der Weise am Lagerbock vorgesehen, dass er in der Drehendstellung das zweite Bauteil mit seiner Breitseite stützt. Durch eine entsprechende Dimensionierung und Formgebung des Lagerbocks einerseits und des plattenförmigen Anschlags andererseits lässt sich daher ohne größeren konstruktiven Aufwand erreichen, dass der Lagerbock und der Anschlag gemeinsam eine Art Einfassung bilden, die in der Drehendstellung das im Drehgelenk gelagerte zweite Bauteil flächig bzw. formschlüssig umgreift. Durch die formschlüssige Aufnahme des zweiten Bauteils in dem am ersten Bauteil vorgesehen Lagerbock und Anschlag zeichnet sich das erfindungsgemäße Drehgelenk damit zumindest in der Drehendstellung durch eine hohe Stabilität aus. Erfindungsgemäß kann durch das Zusammenwirken des Lagerbocks mit dem am Lagerbock vorgesehenen plattenförmigen Anschlag in der Drehendstellung eine flächige Verbindung zwischen dem ersten Bauteil und dem zweiten Bauteil erhalten werden, die hohe Kräfte und Momente um eine von der durch den Lagerbock definierten Drehachse abweichende Achse aufnehmen kann. Gleichzeitig wird durch das erfindungsgemäße Drehgelenk erreicht, dass das zweite Bauteil relativ zum ersten Bauteil nur bis in eine vorgegebene Drehendstellung verschwenkt werden kann. Durch den durch den Anschlag begrenzten Relativdrehbewegungsbereich der beiden Bauteile wird die Handhabung des Drehgelenks erleichtert wird.

Vorteilhafte Weiterbildungen der erfindungsgemäßen Verbindung sind Gegenstand der Unteransprüche.

In der Weiterbildung nach dem Anspruch 2 weist der Lagerbock vorzugsweise zwei, in Richtung der Drehachse in einem Abstand gegenüberliegende Lagerplatten auf, zwischen denen das zweite Bauteil drehbeweglich geführt angeordnet ist. Diese Weiterbildung bietet den Vorteil, dass die beiden Lagerplatten beispielsweise parallel zur Drehbewegungsebene des Drehgelenks und der am Lagerbock vorgesehene Anschlag senkrecht auf der Drehbewegungsebene des Drehgelenks steht.

In der Weiterbildung nach dem Anspruch 3 ist der plattenförmige Anschlag vorzugsweise aus zwei Vorsprüngen gebildet, die in dem vorgegebenen Abstand zur Drehachse jeweils an einer der beiden Lagerplatten vorgesehen sind. In einer einfacheren Ausbildung kann der Anschlag aus lediglich einem Vorsprung an einer der beiden Lagerplatten gebildet sein.

Alternativ dazu kann in der Weiterbildung nach dem Anspruch 4 der plattenförmige Anschlag auch aus einem den Abstand zwischen den beiden Lagerplatten überbrückenden Verbindungssteg gebildet sein, der in dem vorgegebenen Abstand zur Drehachse an einer der beiden Lagerplatten angeordnet ist.

Durch diese Weiterbildung lässt sich zum Einen die Konstruktion und Fertigung des Lagerbocks und des Anschlags vereinfachen. So lässt sich der Lagerbock mit dem Anschlag beispielsweise aus einem Strangprofilteil, z.B. einem Vierkant-Hohlprofil oder einem C-Profil aus Stahl oder Aluminium, durch Fräsen, Laserschneiden, etc. herausarbeiten und die so erhaltene Lagerbock-Anschlag-Einheit in geeigneter Weise, vorzugsweise stoffschlüssig durch Schweißen, an dem ersten Bauteil befestigen. Zum Anderen wird durch diese Weiterbildungen erreicht, dass die beiden Lagerplatten und der Anschlag eine im Querschnitt reckteckige Einfassung bilden, die in der Drehendstellung das am Lagerbock angelenkte zweite Bauteil an drei Seiten stützen. Aufgrund der Lagerplatten und des plattenförmigen Anschlages lassen sich bei geeigneter Dimensionierung ohne weiteres große Stützflächen vorsehen, die in der Drehendstellung einen größtmöglichen Flächenkontakt zwischen dem ersten und zweiten Bauteil und dadurch eine gute Verteilung und Übertragung von auf das Drehgelenk ausgeübten Kräften, Dreh- und Torsionsmomenten ermöglichen.

Durch die Weiterbildung nach dem Anspruch 5 wird in einer konstruktiv einfachen Weise eine Möglichkeit für eine Schraubverbindung des ersten Bauteils mit dem zweiten Bauteil in der Drehendstellung geschaffen. Die beiden Bohrungen auf Seiten des Anschlags und die mit diesen Bohrungen fluchtenden Gewindebohrungen auf Seiten des zweiten Bauteils lassen sich in Richtung Drehachse betrachtet in der Nähe der beiden Lagerplatten bzw. in die Randzonen des zwischen den beiden Lagerplatten aufgenommenen zweiten Bauteils, das beispielsweise ein Vierkant-Hohlprofil sein kann, anordnen. Durch diese Anordnung der auf Seiten des Anschlags vorgesehenen Bohrungen und der mit diesen fluchtenden Gewindebohrungen auf Seiten des zweiten Bauteils in dessen Randzonen kann eine Verformung des zweiten Bauteils kontrolliert werden.

In der Weiterbildung nach dem Anspruch 6 kann der Anschlag unabhängig von den beiden Vorsprüngen zwei in dem vorgegebenen Abstand zur Drehachse angeordnete und in einer durch die Drehachse definierten Drehbewegungsebene liegenden Fortsätze aufweist, die in der Drehendstellung das zweite Bauteil stützen. In einer einfacheren Ausbildung kann auch nur ein Fortsatz an einer der beiden Lagerplatten gebildet sein. Ebenso kann der Abstand des oder der Fortsätze zur Drehachse verschieden sein von dem Abstand des oder Vorsprünge zur Drehachse. Jedoch schafft die Weiterbildung nach dem Anspruch 6 in konstruktiver und fertigungstechnischer Hinsicht einfach zu beherrschende Verhältnisse.

Das vorstehend dargestellte erfindungsgemäße Drehgelenk findet bevorzugt Anwendung für einen Tisch mit klappbar angeorndeten Füßen, d.h. zur drehbeweglichen Anlenkung der Füße eines Tischs an einem eine Tischplatte tragenden Tischgestell. In diesem Fall entspricht ein Fuß des Tisches dem ersten Bauteil und ein die Tischplatte tragendes Tischgestell bzw. eine Komponente des Tischgestells dem zweiten Bauteil des vorstehend dargestellten erfindungsgemäßen Drehgelenks.

Nachstehend wird anhand schematischer Zeichnungen eine bevorzugte Ausführungsformen des erfindungsgemäßen Drehgelenks näher erläutert. Es zeigen:
Figur 1 in perspektivischer Darstellung eine Untersicht eines zusammenklappbaren Tisches mit einem erfindungsgemäßen Drehgelenk gemäß einer ersten Ausführungsform in auseinandergeklapptem Zustand;
Figur 2 in perspektivischer Darstellung eine Detailansicht des erfindungsgemäßen Drehgelenks gemäß der ersten Ausführungsform in einer von der Drehendstellung abweichenden Drehstellung;
Figur 3 in perspektivischer Darstellung eine Detailansicht des erfindungsgemäßen Drehgelenks gemäß einer zweiten Ausführungsform in einer von der Drehendstellung abweichenden Drehstellung; und
Figur 4 in perspektivischer Darstellung eine Untersicht des zusammenklappbaren Tisches aus Figur 1 mit dem erfindungsgemäßen Drehgelenk gemäß der ersten Ausführungsform in zusammengeklapptem Zustand.

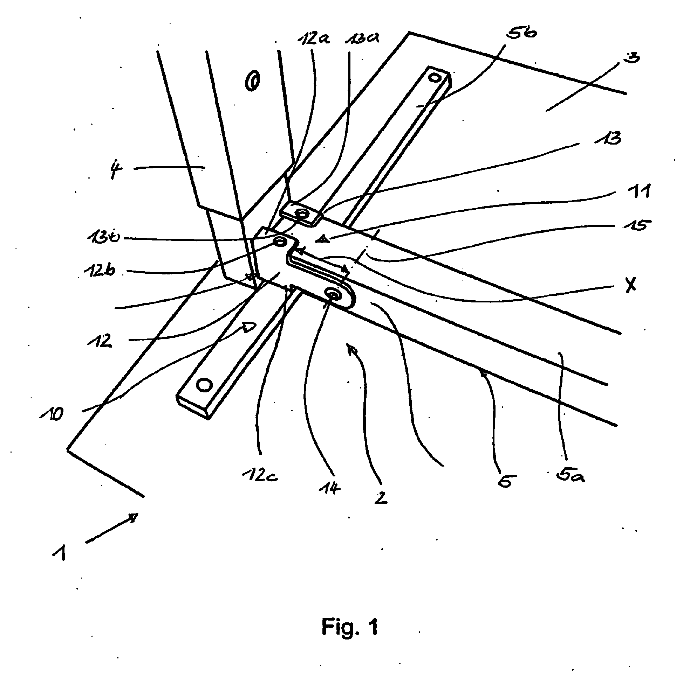

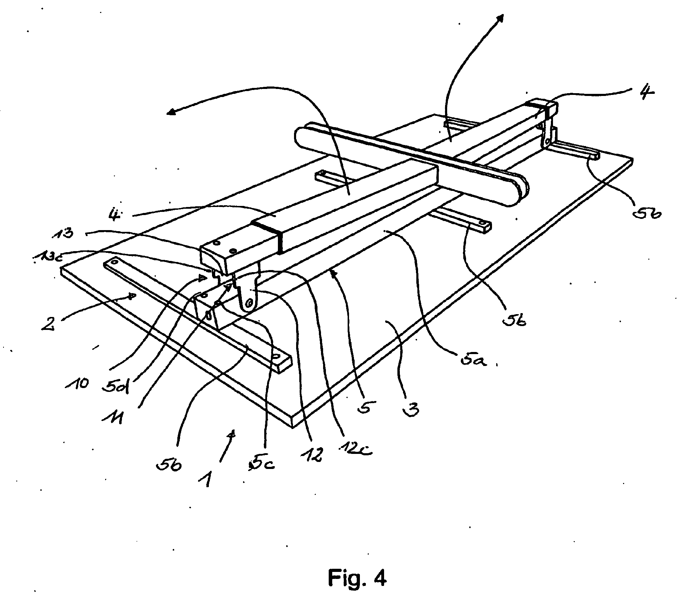

Figur 1 zeigt in perspektivischer Darstellung eine Untersicht eines Tisches 1 mit einer auf einem Tischgestell 2 ruhenden Tischplatte 3. Am Tischgestell 2 sind in der Ausführungsform zwei Füße 4 (vgl. Figur 4) jeweils über ein erfindungsgemäßes Drehgelenk 10 drehbeweglich angelenkt. Die Füße 4 lassen sich von der einer in Figur 4 gezeigten eingeklappten Drehstellung, in der die Füße 4 in etwa parallel zum Tischgestell 2 ausgerichtet sind, um etwa 90° in eine in Figur 1 gezeigten ausgeklappte Drehstellung schwenken (vgl. die Pfeile in Figur 4), die einer Drehendstellung des erfindungsgemäßen Drehgelenks entspricht, in der die Füße 4 in etwa rechtwinklig zum Tischgestell 2 ausgerichtet sind.

Das Tischgestell 2 bildet eine an der Unterseite der Tischplatte 3 (in der Zeichnung oben) angebrachte Tragkonstruktion 5 bestehend aus einem Querträger 5a und mehreren Traversen 5b (vgl. Figur 4) auf. Querträger 4 und Traversen 5 sind dabei im rechten Winkel zueinander angeordnet und aus im Querschnitt rechteckigen Hohlprofilen geformt. Die aus dem Querträger 5a und den Traversen 5b gebildete Tragkonstruktion 5 ist über eine Schraubverbindung oder eine andere geeignete Verbindung an der Tischplatte 3 befestigt.

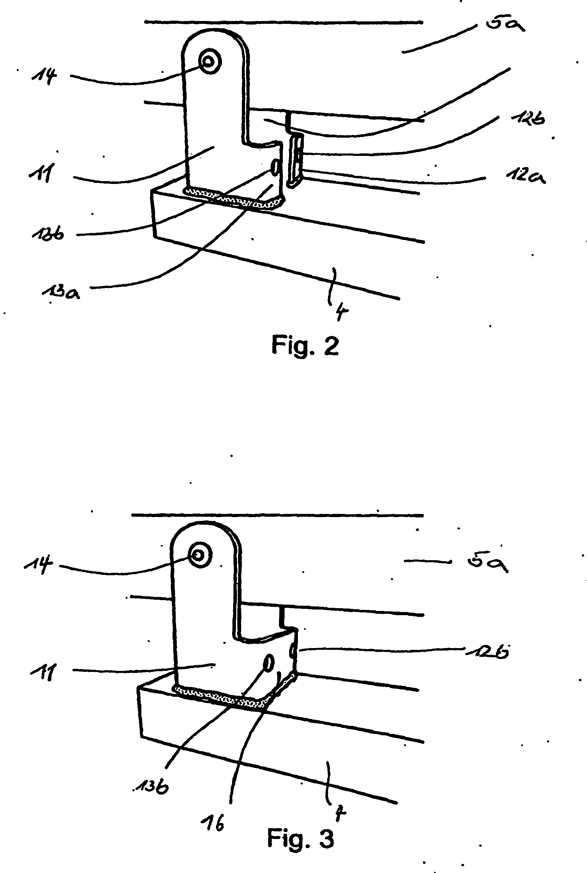

Wie aus Figur 1 ersichtlich ist, ist der Querträger 5a, der einem zweiten Bauteil des erfindungsgemäßen Drehgelenks entspricht, an seinen beiden Längsenden (vgl. Figur 4) jeweils über einen Lagerbock 11 mit jeweils einem Fuß 4, der einem ersten Bauteil des erfindungsgemäßen Drehgelenks entspricht, drehbeweglich verbunden. In der Ausführungsform ist der Lagerbock 11 aus einem Aluminium-Strangprofil mit C-förmigem Querschnitt gefertigt und an den jeweiligen Fuß 4, der in der Ausführungsform aus einem Aluminium-Strangprofil mit rechteckigem Querschnitt, gebildet ist, rechtwinklig angeschweißt, wie es z.B. aus Figur 2 erkennbar ist.

Der Lagerbock 11 weist erfindungsgemäß zwei Lagerplatten 12, 13 auf, die in Richtung der durch einen Drehbolzen 14 definierten Drehachse 15 beabstandet angeordnet sind und den jeweiligen Endabschnitt des Querträgers 5a mittig mit enger Spielpassung aufnehmen. In der Ausführungsform ist der Querträger 5a über den Drehbolzen 9 an den beiden Lagerplatten 12, 13 an den beiden Lagerböcken 11 angelenkt, wie es aus Figur 1 und 4 erkennbar ist. Die Lagerplatten 12, 13 weisen jeweils abgewinkelte plattenförmige Vorsprünge 12a, 13a auf, die mit ihrer Breitseite in einer zur Drehachse 15 parallelen Ebene liegen und in der in Figur 1 gezeigten Drehendstellung flächig am Querträger 5a anliegen und dadurch eine weitere Drehbewegung des Querträgers 5a relativ zu dem jeweiligen Fuß 4 verhindern. Wie in Figur 1 angedeutet ist, sind die Vorsprünge 12, 13 in einem vorgegebenen Abstand x zur Drehachse 15 angeordnet, um einen hinsichtlich Stabilität ausreichenden Hebelarm zu erhalten. Des Weiteren sind die abgewinkelten Vorsprünge 12a, 13a so ausgelegt, dass sie sich in einem Abstand in Richtung der Drehachse 15 gegenüberliegen. Die in der Ausführungsform mit dem Lagerbock 11 einstückig ausgebildeten plattenförmigen Vorsprünge 12a, 13a bilden einen Anschlag des erfindungsgemäßen Drehgelenks, der in der Drehendstellung eine weitere Drehbewegung des zweiten Bauteils relativ zum ersten Bauteil verhindert.

Sowohl die Lagerplatten 12, 13 wie auch die Vorsprünge 12a, 13a sehen in der in Figur 1 gezeigten Drehendstellung damit eine mehrfache flächige Abstützung des Querträgers 5a vor und bilden damit eine Art Einfassung, die den Querträger 5a, konkret den im Lagerbock 11 gelagerten Endabschnitt des Querträgers 5a, eng anliegend und damit quasi formschlüssig aufnimmt. Durch die quasi formschlüssige Aufnahme des Querträgers 5a in den beiden Lagerböcken 11 werden seitliche Bewegungen des Querträgers 5a in Richtung der Drehachse 15 relativ zu den beiden Füßen 4 wie auch Drehbewegungen um eine Längsachse des Querträgers verhindert, wodurch sich eine äußerst stabile Anlenkung der beiden Füße 4 an das Tischgestell 2 erhalten lässt.

Zur Sicherung der Drehendstellung des Drehgelenks 10 ist erfindungsgemäß eine Schraubenverbindung vorgesehen. Hierzu sind an jedem der abgewinkelten plattenförmigen Vorsprünge 12a, 13a Bohrungen 12b, 13b und am Querträger 5a in der Drehendstellung mit den Bohrungen 12b, 13b fluchtende Gewindebohrungen 5c, 5d vorgesehen. Über diese Bohrungen 12b. 13b und Gewindebohrungen 5c, 5d lassen sich die Lagerplatten 12, 13 über die abgewinkelten Abschnitte 12a, 13a in der in Figur 1 gezeigten Drehendstellung mittels nicht gezeigter Gewindeschrauben am Querträger 5a befestigen.

Aus Figur 1 ist erkennbar, dass die Gewindebohrungen 5c, 5d und damit auch die Bohrungen 12, 13, in Richtung der Drehachse 15 betrachtet, soweit als möglich in die Nähe der Randzonen des Querträgers 5a bzw. in die Nähe der beiden Lagerplatten 12, 13 verlagert sind, da dadurch die Torsionssteifigkeit des erfindungsgemäßen Drehgelenks um eine Längsachse des Querträgers 5a wesentlich höher ist als, wenn die Gewindebohrungen 5c, 5d und die Bohrungen 12, 13 in Richtung der Mitte des Querträgers 5a verlagert werden.

Unabhängig von dem durch die beiden Vorsprünge 12a, 13a gebildetne weist in der Ausführungsform der Lagerbock 11 zwei in einem vorgegebenen Abstand zur Drehachse 15 angeordnete und in einer durch die Drehachse 15 definierten Drehbewegungsebene liegende Fortsätze 12c, 13c auf, die in der Drehendstellung an einer der Traversen 5b anliegen. Da die Traverse 5b mit dem Querträger 5a zu der Tragkonstruktion 5 verbunden ist, erhält der Querträger 5a über die entsprechenden Traversen 5b und die Fortsätze 12c, 13c eine zusätzliche Abstützung in der Drehendstellung.

### Beim Aufstellen des Tisches 1 kann wie folgt vorgegangen werden:

Zunächst wird der Tisch 1 mit der Oberseite seiner Tischplatte 3 auf den Boden gelegt. Anschließend werden die Füße aus der in Figur 4 gezeigten Drehstellung um in etwa 90° in die in Figur 1 gezeigten Drehendstellung geschwenkt, bis die abgewinkelten Vorsprünge 12a, 13a der Lagerplatten 12, 13 an dem Querträger 5a anliegen. In der Drehendstellung fluchten die an den Vorsprüngen 12a, 13a vorgesehenen Bohrungen 12b, 13b mit den Gewindebohrungen 5c, 5d des Querträgers 5a, so dass die Drehendlage durch das Einschrauben von die Bohrungen 12b, 13b durchdringenden Gewindeschrauben in die Gewindebohrungen 5c, 5d sichern lässt.

Zum Abbauen des Tisches 1 kann in der umgekehrten Reihenfolge vorgegangen werden.

Neben den in den Zeichnungen dargestellten Ausführungsformen sind Abwandlungenn möglich, ohne dabei den Grundgedanken der vorliegenden Erfindung zu verlassen.

So können zum Beispiel, wie es in Figur 3 gezeigt ist, die beiden Lagerplatten 12, 13 durch einen den Abstand zwischen den beiden Lagerplatten 12, 13 überbrückenden Verbindungssteg 15 verbunden sein. Im Vergleich zu den abgewinkelten Vorsprüngen 12a, 13a wird durch den Verbindungssteg 16 eine größere Anlagefläche für den Querträger 5a in der Drehendstellung erhalten.

Auch wenn das erfindungsgemäße Drehgelenk am Beispiel des Tisches 1 erläutert wurde, sei darauf hingewiesen, dass die Anwendung des erfindungsgemäßen Drehgelenks nicht auf Tische begrenzt ist, sondern allgemein zur drehbeweglichen Verbindung zweier Bauteile geeignet ist.

## Patentansprüche

1. Drehgelenk zur drehbeweglichen Verbindung eines ersten Bauteils (4) mit einem zweiten Bauteil (5a), mit einem an dem ersten Bauteil (4) vorgesehenen Lagerbock (11), an dem das zweite Bauteil (5a) um eine Drehachse (15) drehbeweglich angelenkt ist, **gekennzeichnet durch**
einen am Lagerbock (11) vorgesehenen, plattenförmigen Anschlag, der in einer Drehendstellung eine weitere Drehbewegung des ersten Bauteils (4) relativ zum zweiten Bauteil (5a) verhindert und in einem vorgegebenen Abstand (x) zur Drehachse (15) in der Weise am Lagerbock (11) vorgesehen ist, dass er in der Drehendstellung das zweite Bauteil (5a) mit seiner Breitseite stützt, und gemeinsam mit dem Lagerbock (11) eine im Querschnitt rechteckige Einfassung bildet, die in der Drehendstellung das zweite Bauteil formschlüssig umgreift.

2. Drehgelenk nach Anspruch 1, **dadurch gekennzeichnet, dass**
der Lagerbock (11) zwei, in Richtung der Drehachse (15a) in einem Abstand gegenüberliegende Lagerplatten (12, 13) aufweist, zwischen denen das zweite Bauteil (5a) drehbeweglich geführt angeordnet ist.

3. Drehgelenk nach Anspruch 2, **dadurch gekennzeichnet, dass**
der plattenförmige Anschlag aus zwei Vorsprüngen (12a, 13a) gebildet ist, die in dem vorgegebenen Abstand (x) zur Drehachse (15) jeweils an einer der beiden Lagerplatten (12, 13) vorgesehen sind und in der Drehendstellung an dem zweiten Bauteil (5a) flächig anliegen.

4. Drehgelenk nach Anspruch 2, **dadurch gekennzeichnet, dass**
der plattenförmige Anschlag aus einem den Abstand zwischen den beiden Lagerplatten (12, 13) überbrückenden Verbindungssteg (16) gebildet ist, der in dem vorgegebenen Abstand (x) zur Drehachse (15) angeordnet ist und in der DrehendStellung an dem zweiten Bauteil (5a) flächig anliegt.

5. Drehgelenk nach Anspruch 3 oder 4, **gekennzeichnet durch**
zwei auf der Seite des Anschlags ausgebildete, in Richtung der Drehachse (15) angeordnete Bohrungen (12b, 13b) die in der Drehendstellung mit jeweils einer am zweiten Bauteil (5a) ausgebildeten Gewindebohrung (5c, 5d) fluchten.

6. Drehgelenk nach einem der Ansprüche 3 bis 5, **dadurch** gekenntzeichnet, dass
der Lagerbock (11) unabhängig von dem Anschlag (12a, 13a; 16) zwei in einem vorgegebenen Abstand zur Drehachse (15) angeordnete und in einer durch die Drehachse (15) definierten Drehbewegungsebene liegende Fortsätze (12c, 13c) aufweist, die in der Drehendstellung das zweite Bauteil (5a) stützen.

7. Drehgelenk nach einem der Ansprüche 2 bis 6, **dadurch gekennzeichnet, dass**
die beiden Lagerplatten (12, 13) mit dem Anschlag aus einem Strangprofilteil herausgearbeitet sind.

8. Drehgelenk nach einem der Ansprüche 1 bis 7, **dadurch gekennzeichnet, dass**
der Lagerbock (11) am ersten Bauteil (4) stoffschlüssig befestigt ist.

9. Drehgelenk nach einem der Ansprüche 1 bis 8, **dadurch gekennzeichnet, dass**
die Drehachse (15) von einem das zweite Bauteil (5a) tragenden, am Lagerbock (11) lageunveränderlich gehaltenen Drehbolzen (14) definiert wird.

10. Tisch mit einer Tischplatte (3), die von einem Tischgestell (2) getragen wird, das zumindest einen Fuß (4) aufweist, der über ein Drehgelenk (10) nach einem der Ansprüche 1 bis 9 am Tischgestell (2) drehbeweglich angelenkt ist.

11. Tisch nach Anspruch 10, **dadurch gekennzeichnet, dass**
das Tischgestell (2) als das erste Bauteil den Fuß (4) und als das zweite Bauteil einen die Tischplatte (3) tragenden Querträger (5a) aufweist.

## Claims

1. Pivot joint for connecting a first component (4) to a second component (5a) in a rotationally movable manner, having a bearing block (11) which is provided on the first component (4) and to which the second component (5a) is articulated so as to be able to be rotationally moved about an axis of rotation (15), **characterised by**
a plate-like stop which is provided on the bearing block (11) and which, in a rotation end position, prevents further rotational movement of the first component (4) relative to the second component (5a) and is provided on the bearing block (11) with predetermined spacing (x) relative to the axis of rotation (15) in such a manner that, in the rotation end position, it supports the second component (5a) with a broad side thereof, and together with the bearing block (11) forms a border which has a rectangular cross-section and which in the rotation end position surrounds the second component in a positive-locking manner.

2. Pivot joint according to claim 1, **characterised in that** the bearing block (11) has two bearing plates (12, 13) which are located opposite each other with mutual spacing in the direction of the rotation axis (15a) and between which the second component (5a) is arranged so as to be guided in a rotationally movable manner.

3. Pivot joint according to claim 2, **characterised in that** the plate-like stop comprises two projections (12a, 13a) which are provided with the predetermined spacing (x) relative to the axis of rotation (15) on one of the two bearing plates (12, 13), respectively, and which in the rotation end position abut the second component (5a) in a planar manner.

4. Pivot joint according to claim 2, **characterised in that** the plate-like stop is formed from a connection web (16) which spans the spacing between the two bearing plates (12, 13) and which is arranged with the predetermined spacing (x) relative to the axis of rotation (15) and which, in the rotation end position, abuts the second component (5a) in a planar manner.

5. Pivot joint according to claim 3 or claim 4, **characterised by** two holes (12b, 13b) which are formed at the side of the stop and which are arranged in the direction of the axis of rotation (15) and which, in the rotation end position, are aligned with a threaded hole (5c, 5d) which is formed on the second component (5a), respectively.

6. Pivot joint according to any one of claims 3 to 5, **characterised in that** the bearing block (11), independently of the stop (12a, 13a; 14), has two continuations (12c, 13c) which are arranged with predetermined spacing relative to the axis of rotation (15) and which are located in a rotational movement plane defined by the rotation axis (15) and which, in the rotation end position, support the second component (5a).

7. Pivot joint according to any one of claims 2 to 6, **characterised in that** the two bearing plates (12, 13) are formed with the stop from an extruded profile-member.

8. Pivot joint according to any one of claims 1 to 7, **characterised in that** the bearing block (11) is secured to the first component (4) in a materially-engaging manner.

9. Pivot joint according to any one of claims 1 to 8, **characterised in that** the axis of rotation (15) is defined by a rotation pin (14) which carries the second component (5a) and which is retained on the bearing block (11) so as to be fixed in position.

10. Table having a table plate (3) which is carried by a table frame (2) which has at least one foot (4) which is articulated in a rotationally movable manner to the table frame (2) by means of a pivot joint (10) according to any one of claims 1 to 9.

11. Table according to claim 10, **characterised in that** the table frame (2) has as the first component the foot (4) and as the second component a transverse carrier (5a) which carries the table plate (3).

## Revendications

1. Joint d'articulation de rotation pour assurer la liaison à mouvement de rotation d'une première pièce (4) avec une deuxième pièce (5a), et comprenant un chevalet support de palier (11) qui est prévu sur la première pièce (4) et sur lequel est articulée la deuxième pièce (5a) de manière à être mobile en rotation autour d'un axe de rotation (15),
**caractérisé par** une butée en forme de plaque, prévue sur le chevalet support de palier (11) et qui, dans une position terminale de rotation, empêche une poursuite du mouvement de rotation de la première pièce (4) par rapport à la deuxième pièce (5a), et est prévue sur le chevalet support de palier (11) à une distance prédéterminée (x) de l'axe de rotation (15), de manière telle que, dans la position terminale de rotation, elle prenne appui contre la deuxième pièce (5a) avec sa face de grande largeur, et forme, en commun avec le chevalet support de palier (11), une monture d'enchâssement rectangulaire en section transversale, qui entoure la deuxième pièce par complémentarité de formes, dans la position terminale de rotation.

2. Joint d'articulation de rotation selon la revendication 1,
**caractérisé en ce que** le chevalet support de palier (11) présente deux plaques de palier (12, 13), qui sont mutuellement opposées à distance l'une de l'autre dans la direction de l'axe de rotation (15a), et entre lesquelles est agencée la deuxième pièce (5a) en y étant guidée de manière mobile en rotation.

3. Joint d'articulation de rotation selon la revendication 2,
**caractérisé en ce que** la butée en forme de plaque est formée de deux protubérances (12a, 13a) qui sont prévues, à la distance prédéterminée (x) de l'axe de rotation (15), chacune sur l'une des deux plaques de palier (12, 13), et qui, dans la position terminale de rotation, s'appuient par leur surface sur la deuxième pièce (5a).

4. Joint d'articulation de rotation selon la revendication 2,
**caractérisé en ce que** la butée en forme de plaque est formée par une nervure de liaison (16) qui réalise un pontage entre les deux plaques de palier (12, 13) et est agencée à la distance prédéterminée (x) de l'axe de rotation (15), et qui, dans la position terminale de rotation, s'appuie par sa surface sur la deuxième pièce (5a).

5. Joint d'articulation de rotation selon la revendication 3 ou la revendication 4,
**caractérisé par** deux perçages (12b, 13b) qui sont réalisés côté butée et agencés dans la direction de l'axe de rotation (15), et qui, dans la position terminale de rotation, sont alignés chacun avec un trou taraudé correspondant (5c, 5d) réalisé dans la deuxième pièce (5a).

6. Joint d'articulation de rotation selon l'une des revendications 3 à 5,
**caractérisé en ce que** le chevalet support de palier (11) présente, indépendamment de la butée (12a, 13a ; 14), deux prolongements (12c, 13c) qui sont agencés à une distance prédéterminée de l'axe de rotation (15) et sont situés dans un plan de mouvement de rotation défini par
l'axe de rotation (15), et qui, dans la position terminale de rotation, s'appuient contre la deuxième pièce (5a).

7. Joint d'articulation de rotation selon l'une des revendications 2 à 6,
**caractérisé en ce que** les deux plaques de palier (12, 13) sont façonnées, avec la butée, à partir d'une pièce de profilé filé.

8. Joint d'articulation de rotation selon l'une des revendications 1 à 7,
**caractérisé en ce que** le chevalet support de palier (11) est fixé à la première pièce (4) par une liaison de continuité de matière.

9. Joint d'articulation de rotation selon l'une des revendications 1 à 8,
**caractérisé en ce que** l'axe de rotation (15) est défini par une broche de rotation (14) qui supporte la deuxième pièce (5a) et est maintenue en position invariable sur le chevalet support de palier (11).

10. Table comprenant un plateau de table (3) supporté par une structure de table (2), qui présente au moins un pied (4) articulé de manière mobile en rotation sur la structure de table (2) par l'intermédiaire d'un joint d'articulation de rotation (10) selon l'une des revendications 1 à 9.

11. table selon la revendication 10,
**caractérisée en ce que** la structure de table (2) comprend en tant que ladite première pièce, le pied (4), et en tant que ladite deuxième pièce, une poutrelle traversière (5a) portant le plateau de table (3).
